# FASCICULE DE BREVET EUROPEEN

(11) **EP 4 154 350 B1**
(45) Date de publication et mention de la délivrance du brevet: **07.01.2026**
(21) Numéro de dépôt: 21726920.8
(22) Date de dépôt: 20.05.2021
(51) Int. Cl.: H01M 50/516, H01M 50/502, H01M 50/536, H01M 50/533

(54) **ENSEMBLE ÉLECTROCHIMIQUE, PROCÉDÉ ET INSTALLATION DE FABRICATION CORRESPONDANTS**
ELEKTROCHEMISCHE EINHEIT UND ZUGEHÖRIGES HERSTELLUNGSVERFAHREN UND ANLAGE
ELECTROCHEMICAL UNIT AND CORRESPONDING MANUFACTURING METHOD AND FACILITY

(30) Priorité: 20.05.2020 FR 2005269
(43) Date de publication de la demande: 29.03.2023
(73) Titulaire: SAFT, 92300 Levallois-Perret (FR)
(72) Inventeur: BARDIAU, Maxence, 33185 LE HAILLAN (FR)
(74) Mandataire: Lavoix
(86) Numéro de dépôt international: PCT/EP2021/063476
(87) Numéro de publication internationale: WO 2021/234092

(56) Documents cités:
- EP-A1- 2 296 205
- WO-A1-2013/191480
- US-A1- 2007 134 551
- US-A1- 2012 189 899
- US-A1- 2017 062 792

## Description

La présente invention concerne un ensemble électrochimique, selon le préambule de la revendication, comme connu par exemple de US2007/134551 A.

On connait des ensembles électrochimiques par exemple de EP2239802. L'ensemble électrochimique comprend un empilement d'électrodes et une tête de plaque adaptée pour relier l'empilement d'électrodes à une borne de sortie de courant. La tête de plaque est repliée afin d'être reliée à la borne de sortie de courant.

D'autres ensembles électrochimiques ou batteries électrochimiques sont connus de EP3396738A1 ; EP3373374A1 ; WO2016101880A1 ; EP3382806A1 ; WO2012027835A1 ; WO2010142679A1 ; WO03094258A2 ; et EP1128450A2.

L'invention a pour but de proposer un ensemble électrochimique qui soit facile et économique à fabriquer et un procédé de fabrication correspondant économique et efficace. Notamment l'invention a pour but de proposer une liaison fiable et économique entre les électrodes et les bornes de l'ensemble électrochimique. Par ailleurs, l'ensemble électrochimique de l'invention devrait avoir un volume faible pour une capacité de stockage d'énergie donnée.

A cet effet, l'invention a pour objet un ensemble électrochimique tel que défini ci-dessus, caractérisé par la partie caractérisante de la revendication 1.

Selon des modes de réalisation particuliers de l'ensemble électrochimique, celui-ci peut comporter l'une ou plusieurs des caractéristiques suivantes :
- la liaison par matière est une liaison par soudage ou brasage et en particulier une liaison par soudage par laser ou par ultrasons ;
- l'élément de connexion commun est une feuille en métal repliée dont une portion de languette est fixée à la première et à la seconde languette de connexion électrique et dont une portion de borne est adaptée pour être fixée à la borne de connexion ; et
- l'ensemble comprend la borne de connexion d'une première polarité, et l'élément de connexion commun est fixé à la borne de connexion.

L'invention a en outre pour objet un procédé de fabrication d'un ensemble électrochimique tel que défini ci-dessus, comprenant les étapes, notamment successives, suivantes :
a) fourniture du premier empilement d'éléments électrochimiques muni de la première languette de connexion électrique ;
b) fourniture du second empilement d'éléments électrochimiques muni de la seconde languette de connexion électrique;
c) fourniture de l'élément de connexion commun;
d) mise en configuration non-coplanaire de la première languette de connexion électrique et de la seconde languette de connexion électrique de telle sorte qu'elles sont non-coplanaires, et forment en vue de profil un « V » ou un « U » ;
e) mise en configuration non-coplanaire de l'élément de connexion commun et application sur la première languette de connexion électrique et sur la seconde languette de connexion électrique ;
f) maintien en place d'une enclume entre les premières et secondes languettes de connexion électrique pendant que les deux premières et secondes languettes de connexion électrique sont dans leur configuration non-coplanaire ; et
g) création de la liaison par matière entre l'élément de connexion commun et la première languette de connexion électrique et création de la liaison par matière entre l'élément de connexion commun et la seconde languette de connexion électrique pendant que l'enclume est maintenue en place.

Selon des modes de réalisation particuliers du procédé de fabrication, celui-ci peut comporter l'une ou plusieurs des caractéristiques suivantes :
- lors de l'étape g), la création de la liaison par matière entre l'élément de connexion commun et la première languette de connexion électrique et la création de la liaison par matière entre l'élément de connexion commun et la seconde languette de connexion électrique ont lieu simultanément ;
- la création de la liaison par matière entre l'élément de connexion commun et la première languette de connexion électrique est une étape de soudure, notamment de soudure par ultrasons ou par laser, et/ou la création de la liaison par matière entre l'élément de connexion commun et la seconde languette de connexion électrique est une étape de soudure, notamment de soudure par ultrasons ou par laser ;
- la création de la liaison par matière entre l'élément de connexion commun et la première languette de connexion électrique est une étape de soudure par ultrasons et est effectuée moyennant la mise en place d'une première sonotrode du côté de la première languette de connexion électrique et l'élément de connexion commun opposé à l'enclume, et/ou lequel la création de la liaison par matière entre l'élément de connexion commun et la seconde languette de connexion électrique est une étape de soudure par ultrasons et est effectuée moyennant la mise en place d'une seconde sonotrode du côté de la seconde languette de connexion électrique et l'élément de connexion commun opposé à l'enclume ; et
- l'une ou plusieurs des étapes supplémentaires, après l'étape f):
   h) dépliage de l'élément de connexion commun lié à la première languette de connexion électrique et de l'élément de connexion commun lié à la seconde languette de connexion électrique, de telle sorte que les la première languette de connexion électrique et la seconde languette de connexion électrique sont essentiellement coplanaires,
   i) fixation de la portion de borne à la borne de connexion
   j) éventuellement pliage de l'élément de connexion commun de telle sorte que la portion de borne vient se positionner en face de la portion de connexion.

L'invention a en outre pour objet une installation de fabrication d'un ensemble électrochimique tel que défini ci-dessus, comprenant :
- une enclume,
- un premier et un second outil de liaison, notamment deux sonotrodes ou têtes de soudage laser, et
l'installation étant configurée et adaptée pour mettre en œuvre un procédé tel que défini ci-dessus.

L'invention sera mieux comprise à la lecture de la description qui va suivre, donnée uniquement à titre d'exemple et faite en se référant aux dessins annexés, sur lesquels :
**[****Fig 1****]** La Figure 1 est une vue schématique en coupe d'une batterie électrochimique comprenant un ensemble électrochimique selon l'invention;
**[****Fig 2****]** La Figure 2 est une vue schématique partiellement en coupe d'un ensemble électrochimique selon l'invention pendant une première étape de sa fabrication en utilisant une installation de fabrication selon l'invention;
**[****Fig 3****]** La Figure 3 montre, selon une vue analogue à celle de la Figure 2, l'ensemble électrochimique selon l'invention pendant une deuxième étape de sa fabrication ;
**[****Fig 4****]** La Figure 4 montre, selon une vue analogue à celle de la Figure 3, l'ensemble électrochimique selon l'invention pendant une troisième étape de sa fabrication.

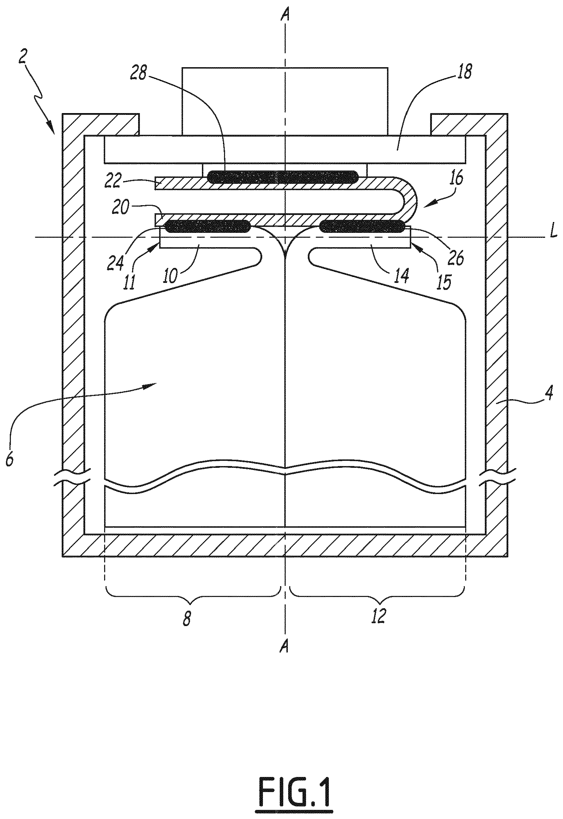

Sur la Figure 1 est représentée une batterie selon l'invention, désignée par la référence générale 2. Sur cette figure, la batterie 2 est à l'état assemblée. La batterie 2 est une batterie électrochimique telle qu'utilisée habituellement dans les véhicules électriques. Toutefois, d'autres domaines d'application de la batterie 2 sont envisageables, tels que le stockage d'énergie, la mobilité électrique, l'aviation, le ferroviaire.

La batterie 2 comprend un carter 4 et un ensemble électrochimique 6.

L'ensemble électrochimique 6 comprend un premier empilement d'éléments électrochimiques 8 qui est muni d'une première languette de connexion électrique 10. L'ensemble électrochimique 6 comprend un second empilement d'éléments électrochimiques 12 qui est muni d'une seconde languette de connexion électrique 14. Chaque empilement d'éléments électrochimiques est communément appelé « Stack ».

La batterie 2 peut comprendre un nombre quelconque d'éléments électrochimiques 6.

La première languette de connexion électrique 10 est formée d'une superposition de feuillards en métal qui sont reliés ou formés d'un seul tenant avec des collecteurs de courant du premier empilement d'éléments électrochimiques 8. La deuxième languette de connexion électrique 14 est formée d'une superposition de feuillards en métal qui sont reliés ou formés d'un seul tenant avec des collecteurs de courant du second empilement d'éléments électrochimiques 12.

Le premier empilement d'éléments électrochimiques 8 et le second empilement d'éléments électrochimiques 12 s'étendent de part et d'autre d'un plan de symétrie A-A.

Le premier empilement d'éléments électrochimiques 8 et le second empilement d'éléments électrochimiques 12 sont disposés dans le carter 4 et sont électriquement reliés l'un à l'autre, soit selon une connexion électrique en parallèle.

L'ensemble électrochimique 6 comprend un élément de connexion commun 16 (aussi appelé « tab »), reliant électriquement la première languette de connexion électrique 10 et la seconde languette de connexion électrique 14.

L'ensemble électrochimique 6 comprend une borne de connexion 18 d'une première polarité. L'élément de connexion commun 16 est fixé à la borne de connexion 18 et relie électriquement la première languette de connexion électrique 10 et la seconde languette de connexion électrique 14 à la borne de connexion 18.

L'ensemble électrochimique 6 comprend une borne de connexion d'une seconde polarité. Les deux bornes de connexion sont par exemple solidaires d'un couvercle et sont donc manipulables d'un seul bloc avec ce couvercle.

Le carter 4 est par exemple un carter parallélépipédique rectangulaire et formé de métal ou d'un matériau thermoplastique. En variante, le carter 4 a une forme cylindrique à section circulaire. Le carter 4 a des parois qui sont moins déformables que les parois des empilements d'éléments électrochimiques 8 et 12.

L'élément de connexion commun 16 est une feuille en métal repliée munie d'une portion de languette 20, qui est fixée à la première et à la seconde languette de connexion électrique 10, 14, et munie d'une portion de borne 22, qui est adaptée pour être ou qui est fixée à la borne de connexion 18.

L'élément de connexion commun 16 est relié à la première languette de connexion électrique 10 et à la seconde languette de connexion électrique 14 par une liaison par matière. L'élément de connexion commun 16, et plus particulièrement la portion de languette 20, forme donc avec la première languette de connexion électrique 10 un premier emplacement de liaison 24 et avec la seconde languette de connexion électrique 14 un second emplacement de liaison 26. La liaison par matière est électriquement conductrice. La liaison par matière peut être une liaison par soudage ou brasage et en particulier une liaison par soudage par laser ou par ultrasons.

L'élément de connexion commun 16 est relié électriquement à la borne de connexion 18 par une liaison par matière. Cette liaison par matière est électriquement conductrice. L'élément de connexion commun 16, et plus particulièrement la portion de borne 22, forme donc avec la borne de connexion 18 un troisième emplacement de liaison 28.

Comme visible sur la figure 1, à l'état assemblé de la batterie 2, ou lorsque l'ensemble électrochimique 6 est fini, mais avant assemblage de la batterie 2, la première languette de connexion électrique 10 et la seconde languette de connexion électrique 14 sont essentiellement coplanaires et s'étendent selon un plan de languette L-L. Ceci est l'état après assemblage. Dans cette configuration, la première languette de connexion électrique 10 et la seconde languette de connexion électrique 14 s'étendent dans des sens opposés et l'une à l'écart de l'autre. Plus précisément, la première languette de connexion électrique 10 et la seconde languette de connexion électrique 14 comprennent chacune une extrémité ou un bord libre 11 respectivement 15, qui s'étendent dans des sens opposés et l'un ou l'une à l'écart de l'autre.

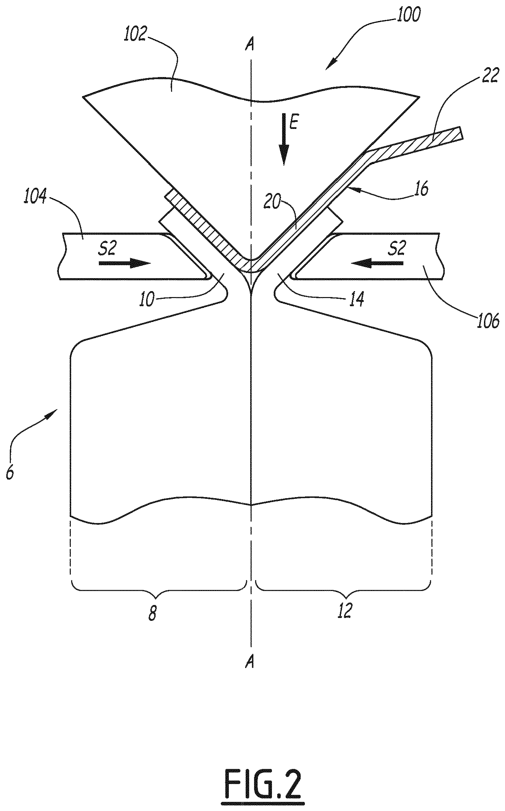

Comme ceci est visible sur la figure 2, lors de l'assemblage, la première languette de connexion électrique 10 et la seconde languette de connexion électrique 14 sont non-coplanaires. En particulier, les deux languettes de connexion électrique 10, 14 forment en vue de profil un « V ». De plus, les deux languettes de connexion électrique 10, 14 sont de préférence symétriques par rapport au plan de symétrie A - A.

Alternativement, les deux languettes de connexion électrique forment en vue de profil un « U ».

Par la suite seront expliquées les étapes d'un procédé de fabrication d'un ensemble électrochimique 6, respectivement de la batterie 2, divulgué ci-dessus, en se référant aux figures 2 à 4.

Sur la figure 2 est représentée une installation de fabrication 100 d'un ensemble électrochimique 6 selon l'invention. L'installation de fabrication 100 comporte une enclume 102, un premier outil de liaison 104 et un second outil de liaison 106.

Le procédé de fabrication comprend les étapes, notamment successives, suivantes.

Tout d'abord, on fournit le premier empilement d'éléments électrochimiques 8 muni de la première languette de connexion électrique 10 et on fournit le second empilement d'éléments électrochimiques 12 muni de la seconde languette de connexion électrique 14.

Ensuite, ou parallèlement, on fournit l'élément de connexion commun 16.

La première languette de connexion électrique 10 et la seconde languette de connexion électrique 14 sont mises en configuration non-coplanaire, à savoir de de telle sorte qu'elles sont non-coplanaires, et forment en vue de profil un « V » ou un « U ». La configuration en « V » est montrée sur la figure 2.

Ensuite, l'élément de connexion commun 16 est mis en une configuration non-coplanaire. Dans cette configuration, la portion de languette 20 a une forme complémentaire de la forme des deux premières languettes de connexion électrique 10 et seconde languette de connexion électrique 14. La portion de languette 20 a donc une forme de « V » ou de « U ».

Puis, la portion de languette 20 est appliquée sur la première languette de connexion électrique 10 et sur la seconde languette de connexion électrique 14.

Ensuite, l'enclume 102 est mise en place, selon une direction de mise en place d'enclume E qui s'étend dans le plan A-A, sur la portion de languette 20 et disposée entre les deux première et seconde languette de connexion électrique 10, 14.

L'enclume 102 est maintenue entre les première et seconde languettes de connexion électrique 10, 14 pendant que les deux les première et seconde languettes de connexion électrique sont dans leur configuration non-coplanaire.

Ensuite, le premier outil de liaison 104 respectivement le second outil de liaison 106 est appliqué sur la première languette de connexion électrique respectivement sur la seconde languette de connexion électrique 14 selon un sens d'application S1 respectivement S2, dirigés l'un vers l'autre et perpendiculairement au plan de symétrie A-A (voir figure 2).

Enfin, la liaison par matière entre l'élément de connexion commun, plus précisément la portion de languette 20, et la première languette de connexion électrique 10 est créée et la liaison par matière entre l'élément de connexion commun 16, plus précisément la portion de languette 20, et la seconde languette de connexion électrique 14, pendant que l'enclume 102 est maintenue en place lors de la création des deux liaisons par matière.

De préférence, la création de la liaison par matière entre l'élément de connexion commun 16 et la première languette de connexion électrique 10 et la création de la liaison par matière entre l'élément de connexion commun et la seconde languette de connexion électrique ont lieu simultanément.

Avantageusement, la création de la liaison par matière entre l'élément de connexion commun 16 et la première languette de connexion électrique 10 est une étape de soudure, notamment de soudure par ultrasons ou laser. Dans ce cas, le premier outil de liaison 104 est une sonotrode ou une tête de soudage laser. Avantageusement, la création de la liaison par matière entre l'élément de connexion commun 16 et la seconde languette de connexion électrique 14 est une étape de soudure, notamment de soudure par ultrasons ou laser. Dans ce cas, le second outil de liaison 106 est une sonotrode ou une tête de soudage laser.

Plus précisément, la création de la liaison par matière à l'emplacement 24 entre l'élément de connexion commun 16 et la première languette de connexion électrique peut être une étape de soudure par ultrasons. Dans ce cas, la liaison est effectuée moyennant la mise en place d'une première sonotrode du côté de la première languette de connexion électrique 10 et l'élément de connexion commun 16 opposé à l'enclume. La création de la liaison par matière à l'emplacement 26 entre l'élément de connexion commun 16 et la seconde languette de connexion électrique 14 est une étape de soudure par ultrasons et est effectuée moyennant la mise en place d'une seconde sonotrode du côté de la seconde languette de connexion électrique et l'élément de connexion commun opposé à l'enclume.

Une fois que les liaisons par matière entre l'élément de connexion commun 16 et les deux languettes de connexion 10 et 14 ont été établies, les étapes suivantes sont mises en œuvre.

Bien entendu, l'enclume 102 et les premier et second outils de liaison 104, 106 sont retirés.

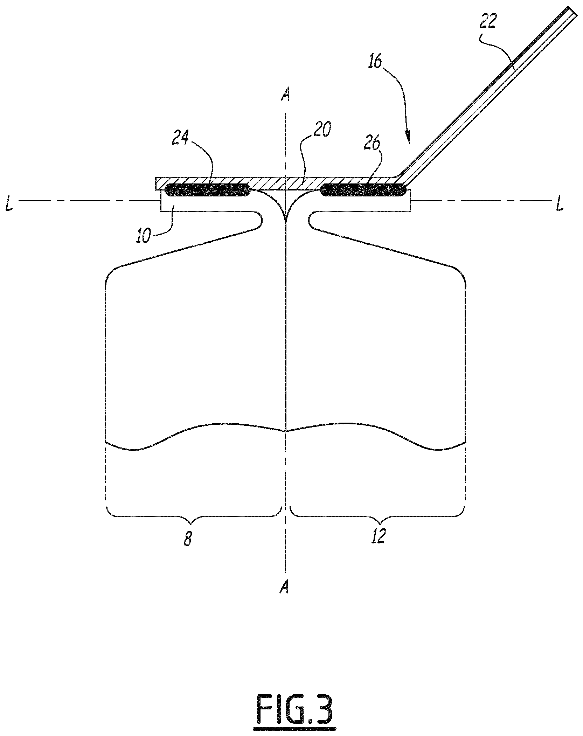

L'élément de connexion commun 16 qui est lié à la première languette de connexion électrique 10 et à la seconde languette de connexion électrique 14 ainsi que ces languettes de connexion électrique 10, 14 sont dépliés, de telle sorte que la première languette de connexion électrique 10 et la seconde languette de connexion électrique 14 sont essentiellement coplanaires. L'ensemble du premier empilement d'éléments électrochimiques 8, du second empilement d'éléments électrochimiques 12 et de l'élément de connexion commun 16 prennent alors la configuration montrée sur la figure 3.

Dans cette configuration, la première languette de connexion électrique 10 et la seconde languette de connexion électrique 14 s'étendent dans des sens opposés et l'une à l'écart de l'autre. Plus précisément, la première languette de connexion électrique 10 et la seconde languette de connexion électrique 14 comprennent chacune une extrémité ou un bord libre 11 respectivement 15, qui s'étendent dans des sens opposés et l'un ou l'une à l'écart de l'autre.

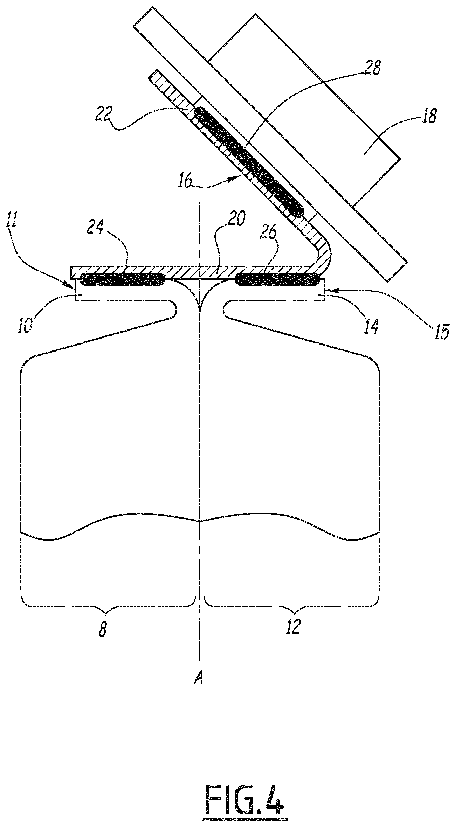

Ensuite, la borne de connexion 18 est fixée sur la portion de borne 22, par exemple par brasage ou soudage laser ou par ultrasons dans une configuration montrée sur la figure 4.

Le procédé ci-dessus peut être ensuite également mis en œuvre pour les éléments de connexion électrique de la seconde polarité. Dans ce cas, l'étape de fixation de la borne de connexion 18 de la seconde polarité sur la portion de borne 22 de la seconde polarité est effectuée pendant que la borne de connexion 18 de la première polarité est déjà à l'état fixée sur la portion de borne 22 de la première polarité ou simultanément à cette fixation de la borne de connexion 18 de la première polarité. On obtient alors les deux bornes de connexion 18 qui sont à l'état fixé sur la portion de borne 22 de la polarité respective.

Les bornes de connexion 18 des deux polarités peuvent être solidaires d'un même couvercle de la batterie 2.

Ensuite, l'élément de connexion commun 16 est plié de telle sorte que la portion de borne 22 vient se positionner en face de la portion de connexion 20.

Dans le cas où les bornes de connexion 18 des deux polarités sont solidaires d'un même couvercle et à l'état fixé sur la portion de borne 22 de la polarité respective, les éléments de connexion commun 16 des deux polarités sont pliés simultanément.

Enfin, le carter 4 est mis en place autour des éléments précédemment réalisés, en obtenant la batterie 2.

La batterie, le procédé et l'installation selon l'invention conduisent à des temps de cycle de fabrication courts et à une fabrication économique.

## Revendications

1. Ensemble électrochimique, du type comprenant
un premier empilement d'éléments électrochimiques (8) muni d'une première languette de connexion électrique (10),
un second empilement d'éléments électrochimiques (12) muni d'une seconde languette de connexion électrique (14),
un élément de connexion commun (16), reliant électriquement la première languette de connexion électrique et la seconde languette de connexion électrique et adapté pour relier électriquement la première languette de connexion électrique et la seconde languette de connexion électrique à une borne de connexion (18) d'une première polarité,
l'élément de connexion commun étant relié à la première languette de connexion électrique et à la seconde languette de connexion électrique par une liaison par matière **caractérisé en ce que**
la première languette de connexion électrique (10) et la seconde languette de connexion électrique (14) sont non-coplanaires, et forment en vue de profil un « V » ou un « U ».

2. Ensemble électrochimique selon la revendication 1, dans lequel la liaison par matière est une liaison par soudage ou brasage et en particulier une liaison par soudage par laser ou par ultrasons.

3. Ensemble électrochimique selon la revendication 1 ou 2, dans lequel l'élément de connexion commun (16) est une feuille en métal repliée dont une portion de languette (20) est fixée à la première et à la seconde languette de connexion électrique et dont une portion de borne (22) est adaptée pour être fixée à la borne de connexion.

4. Ensemble électrochimique selon l'une quelconque des revendications 1 à 3, comprenant la borne de connexion (18) d'une première polarité, et dans lequel l'élément de connexion commun est fixé à la borne de connexion.

5. Procédé de fabrication d'un ensemble électrochimique selon l'une quelconque des revendications précédentes, comprenant les étapes, notamment successives, suivantes :
a) fourniture du premier empilement d'éléments électrochimiques (8) muni de la première languette de connexion électrique (10) ;
b) fourniture du second empilement d'éléments électrochimiques (12) muni de la seconde languette de connexion électrique (14) ;
c) fourniture de l'élément de connexion commun (16) ;
d) mise en configuration non-coplanaire de la première languette de connexion électrique et de la seconde languette de connexion électrique de telle sorte qu'elles sont non-coplanaires, et forment en vue de profil un « V » ou un « U » ;
e) mise en configuration non-coplanaire de l'élément de connexion commun (16) et application sur la première languette de connexion électrique et sur la seconde languette de connexion électrique ;
f) maintien en place d'une enclume (102) entre les première et seconde languettes de connexion électrique pendant que les deux première et seconde languettes de connexion électrique sont dans leur configuration non-coplanaire ; et
g) création de la liaison par matière entre l'élément de connexion commun et la première languette de connexion électrique et création de la liaison par matière entre l'élément de connexion commun et la seconde languette de connexion électrique pendant que l'enclume (102) est maintenue en place.

6. Procédé de fabrication selon la revendication 5, dans lequel, lors de l'étape g), la création de la liaison par matière entre l'élément de connexion commun (16) et la première languette de connexion électrique (10) et la création de la liaison par matière entre l'élément de connexion commun et la seconde languette de connexion électrique (14) ont lieu simultanément.

7. Procédé de fabrication selon la revendication 5 ou 6, dans lequel la création de la liaison par matière entre l'élément de connexion commun (16) et la première languette de connexion électrique (10) est une étape de soudure, notamment de soudure par ultrasons ou par laser, et/ou la création de la liaison par matière entre l'élément de connexion commun (16) et la seconde languette de connexion électrique (14) est une étape de soudure, notamment de soudure par ultrasons ou par laser.

8. Procédé de fabrication selon la revendication 7, dans lequel la création de la liaison par matière entre l'élément de connexion commun et la première languette de connexion électrique est une étape de soudure par ultrasons et est effectuée moyennant la mise en place d'une première sonotrode (104) du côté de la première languette de connexion électrique et l'élément de connexion commun opposé à l'enclume (102), et/ou lequel la création de la liaison par matière entre l'élément de connexion commun (16) et la seconde languette de connexion électrique (14) est une étape de soudure par ultrasons et est effectuée moyennant la mise en place d'une seconde sonotrode (106) du côté de la seconde languette de connexion électrique et l'élément de connexion commun opposé à l'enclume.

9. Procédé de fabrication selon l'une quelconque des revendications 5 à 8, comprenant l'une ou plusieurs des étapes supplémentaires, après l'étape f) :
h) dépliage de l'élément de connexion commun (16) lié à la première languette de connexion électrique et de l'élément de connexion commun lié à la seconde languette de connexion électrique, de telle sorte que les la première languette de connexion électrique et la seconde languette de connexion électrique sont essentiellement coplanaires,
i) fixation de la portion de borne (22) à la borne de connexion (18),
j) éventuellement pliage de l'élément de connexion commun (16) de telle sorte que la portion de borne (22) vient se positionner en face de la portion de connexion.

10. Installation (100) de fabrication d'un ensemble électrochimique selon l'une quelconque des revendications 1 à 4, comprenant :
- une enclume (102),
- un premier et un second outil de liaison (104, 106), notamment deux sonotrodes ou têtes de soudage laser, et
l'installation étant configurée et adaptée pour mettre en œuvre un procédé selon l'une quelconque des revendications 5 à 9.

## Patentansprüche

1. Elektrochemische Anordnung, der Art, die Folgendes umfasst
einen ersten Stapel elektrochemischer Elemente (8), der mit einer ersten elektrischen Verbindungslasche (10) versehen ist,
einen zweiten Stapel elektrochemischer Elemente (12), der mit einer zweiten elektrischen Verbindungslasche (14) versehen ist,
ein gemeinsames Verbindungselement (16), das die erste elektrische Verbindungslasche und die zweite elektrische Verbindungslasche elektrisch verbindet und angepasst ist, um die erste elektrische Verbindungslasche und die zweite elektrische Verbindungslasche elektrisch mit einem Verbindungsanschluss (18) einer ersten Polarität zu verbinden,
wobei das gemeinsame Verbindungselement durch eine materielle Verbindung mit der ersten elektrischen Verbindungslasche und der zweiten elektrischen Verbindungslasche verbunden ist, **dadurch gekennzeichnet, dass**
die erste elektrische Verbindungslasche (10) und die zweite elektrische Verbindungslasche (14) nicht koplanar sind und in der Seitenansicht ein "V" oder ein "U" bilden.

2. Elektrochemische Anordnung nach Anspruch 1, wobei die materielle Verbindung eine Schweiß- oder Lötverbindung und insbesondere eine Laser- oder Ultraschallschweißverbindung ist.

3. Elektrochemische Anordnung nach Anspruch 1 oder 2, wobei das gemeinsame Verbindungselement (16) eine gefaltete Metallfolie ist, wovon ein Laschenabschnitt (20) an der ersten und der zweiten elektrischen Verbindungslasche befestigt ist und wovon ein Anschlussabschnitt (22) angepasst ist, um an dem Verbindungsanschluss befestigt zu werden.

4. Elektrochemische Anordnung nach einem der Ansprüche 1 bis 3, umfassend den Verbindungsanschluss (18) einer ersten Polarität, und wobei das gemeinsame Verbindungselement an dem Verbindungsanschluss befestigt ist.

5. Herstellungsverfahren einer elektrochemischen Anordnung nach einem der vorherigen Ansprüche, umfassend die folgenden insbesondere aufeinanderfolgenden Schritte:
a) Bereitstellen des ersten Stapels elektrochemischer Elemente (8), der mit der ersten elektrischen Verbindungslasche (10) versehen ist;
b) Bereitstellen des zweiten Stapels elektrochemischer Elemente (12), der mit der zweiten elektrischen Verbindungslasche (14) versehen ist;
c) Bereitstellen des gemeinsamen Verbindungselements (16);
d) Bringen der ersten elektrischen Verbindungslasche und der zweiten elektrischen Verbindungslasche in eine nicht-koplanare Konfiguration, sodass sie nichtkoplanar sind und in der Seitenansicht ein "V" oder ein "U" bilden;
e) Bringen des gemeinsamen Verbindungselements (16) in eine nicht-koplanare Konfiguration und Anwenden auf die erste elektrische Verbindungslasche und die zweite elektrische Verbindungslasche;
f) Beibehalten der Position eines Ambosses (102) zwischen der ersten und der zweiten elektrischen Verbindungslasche, während sowohl die erste als auch die zweite elektrische Verbindungslasche in ihrer nicht-koplanaren Konfiguration sind; und
g) Erzeugen der materiellen Verbindung zwischen dem gemeinsamen Verbindungselement und der ersten elektrischen Verbindungslasche und Erzeugen der materiellen Verbindung zwischen dem gemeinsamen Verbindungselement und der zweiten elektrischen Verbindungslasche, während der Amboss (102) in Position gehalten wird.

6. Herstellungsverfahren nach Anspruch 5, wobei in Schritt g) das Erzeugen der materiellen Verbindung zwischen dem gemeinsamen Verbindungselement (16) und der ersten elektrischen Verbindungslasche (10) und das Erzeugen der materiellen Verbindung zwischen dem gemeinsamen Verbindungselement und der zweiten elektrischen Verbindungslasche (14) gleichzeitig erfolgen.

7. Herstellungsverfahren nach Anspruch 5 oder 6, wobei das Erzeugen der materiellen Verbindung zwischen dem gemeinsamen Verbindungselement (16) und der ersten elektrischen Verbindungslasche (10) ein Schweißschritt ist, insbesondere ein Ultraschall- oder Laserschweißschritt, und/oder das Erzeugen der materiellen Verbindung zwischen dem gemeinsamen Verbindungselement (16) und der zweiten elektrischen Verbindungslasche (14) ein Schweißschritt ist, insbesondere ein Ultraschall- oder Laserschweißschritt.

8. Herstellungsverfahren nach Anspruch 7, wobei das Erzeugen der materiellen Verbindung zwischen dem gemeinsamen Verbindungselement und der ersten elektrischen Verbindungslasche ein Ultraschallschweißschritt ist und mittels eines Anbringens einer ersten Sonotrode (104) auf der Seite der ersten elektrischen Verbindungslasche und des gemeinsamen Verbindungselements gegenüber dem Amboss (102) durchgeführt wird, und/oder wobei das Erzeugen der materiellen Verbindung zwischen dem gemeinsamen Verbindungselement (16) und der zweiten elektrischen Verbindungslasche (14) ein Ultraschallschweißschritt ist und mittels eines Anbringens einer zweiten Sonotrode (106) auf der Seite der zweiten elektrischen Verbindungslasche und dem gemeinsamen Verbindungselement gegenüber dem Amboss durchgeführt wird.

9. Herstellungsverfahren nach einem der Ansprüche 5 bis 8, umfassend nach Schritt f) einen oder mehrere der zusätzlichen Schritte:
h) Entfalten des gemeinsamen Verbindungselements (16), das mit der ersten elektrischen Verbindungslasche verbunden ist, und des gemeinsamen Verbindungselements, das mit der zweiten elektrischen Verbindungslasche verbunden ist, sodass die erste elektrische Verbindungslasche und die zweite elektrische Verbindungslasche im Wesentlichen koplanar sind,
i) Befestigen des Anschlussabschnitts (22) an dem Verbindungsanschluss (18),
j) eventuell Biegen des gemeinsamen Verbindungselements (16), sodass der Anschlussabschnitt (22) gegenüber dem Verbindungsabschnitt positioniert wird.

10. Anlage (100) zur Herstellung einer elektrochemischen Anordnung nach einem der Ansprüche 1 bis 4, umfassend:
- einen Amboss (102),
- ein erstes und ein zweites Verbindungswerkzeug (104, 106), insbesondere zwei Sonotroden oder Laserschweißköpfe, und
wobei die Anlage konfiguriert und angepasst ist, um ein Verfahren nach einem der Ansprüche 5 bis 9 durchzuführen.

## Claims

1. An electrochemical unit of the type comprising
a first stack of electrochemical elements (8) provided with a first electrical connection tab (10),
a second stack of electrochemical elements (12) provided with a second electrical connection tab (14),
a common connection element (16), electrically connecting the first electrical connection tab and the second electrical connection tab and suitable for electrically connecting the first electrical connection tab and the second electrical connection tab to an electrical connection terminal (18) with a first polarity,
the common connection member is connected by a material bond to the first electrical connection tab and to the second electrical connection tab, **characterized in that** the first electrical connection tab (10) and the second electrical connection tab (14) are non-coplanar, and form in a profile view a "V" or a "U".

2. The electrochemical unit according to claim 1, wherein the material bond is a welding or brazing bonding and in particular a laser or ultrasonic welding bonding.

3. The electrochemical unit according to claim 1 or 2, wherein the common connection member (16) is a folded metal sheet, a tab portion (20) of which is fastened to the first and second electrical connection tabs and a terminal portion (22) of which is suitable for being fastened to the connection terminal.

4. The electrochemical unit according to any of claims 1 to 3, comprising the connection terminal (18) with a first polarity, and wherein the common connection member is fastened to the connection terminal.

5. The manufacturing process for an electrochemical unit according to any of the preceding claims, comprising the following, in particular successive steps:
a) supplying the first stack of electrochemical elements (8) provided with the first electrical connection tab (10);
b) supplying the second stack of electrochemical elements (12) provided with the second electrical connection tab (14);
c) supplying the common connection element (16);
d) setting in a non-coplanar configuration, the first electrical connection tab and the second electrical connection tab such that same are non-coplanar, and form in a profile view, a "V" or a "U";
e) setting in a non-coplanar configuration, the common connection element (16) and application onto the first electrical connection tab and onto the second electrical connection tab;
f) holding an anvil (102) in place between the first and second electrical connection tabs while the first and second electrical connection tabs are in their non-coplanar configuration; and
g) producing the material connection between the common connection element and the first electrical connection tab and producing the material connection between the common connection element and the second electrical connection tab while the anvil (102) is held in place.

6. The manufacturing method according to claim 5, wherein during the step g), the production of the material bond between the common connection element (16) and the first electrical connection tab (10) and the production of the material bond between the common connection element and the second electrical connection tab (14) take place simultaneously.

7. The manufacturing method according to claim 5 or 6, wherein the production of the material bond between the common connection element (16) and the first electrical connection tab (10) is a welding step, in particular an ultrasonic or laser welding step, and/or the production of the material bond between the common connection element (16) and the second electrical connection tab (14) is a welding step, in particular an ultrasonic or laser welding step.

8. The manufacturing method according to claim 7, wherein the production of the material bond between the common connection element and the first electrical connection tab is an ultrasonic welding step and is carried out by setting in place a first sonotrode (104) on the side of the first electrical connection tab and the common connection element opposite the anvil (102), and/or wherein the production of the material bond between the common connection element (16) and the second electrical connection tab (14) is an ultrasonic welding step and is carried out by setting in place a second sonotrode (106) on the side of the second electrical connection tab and the common connection element opposite the anvil.

9. The manufacturing method according to any of claims 5 to 8, comprising, after step f), one or more of the following additional steps:
h) unfolding the common connection element (16) connected to the first electrical connection tab and the common connection element connected to the second electrical connection tab, such that the first electrical connection tab and the second electrical connection tab are essentially coplanar,
i) fastening the terminal portion (22) to the connection terminal (18),
j) bending, if appropriate, the common connection element (16) so that the terminal portion (22) is positioned opposite the connection portion.

10. A manufacturing installation (100) for an electrochemical unit according to any of claims 1 to 4, comprising:
- an anvil (102),
- a first and a second bonding tool (104, 106), in particular, two sonotrodes or laser welding heads, and
the installation being configured and suitable for implementing a method according to any of claims 5 to 9.
